# EUROPÄISCHE PATENTSCHRIFT

(11) **EP 1 957 366 B1**
(45) Veröffentlichungstag und Bekanntmachung des Hinweises auf die Patenterteilung: **15.04.2009**
(21) Anmeldenummer: 06817464.8
(22) Anmeldetag: 27.11.2006
(51) Int. Cl.: B64G 1/00, B64G 1/14, B64B 1/06

(54) **KLAPPBARE RAUMFÄHRE**
COLLAPSIBLE SPACE SHUTTLE
VEHICULES SPATIAUX REPLIABLES

(30) Priorität: 29.11.2005 AT 19222005
(43) Veröffentlichungstag der Anmeldung: 20.08.2008
(73) Patentinhaber: Sharif, Issam, 1020 Wien (AT)
(72) Erfinder: Sharif, Issam, 1020 Wien (AT)
(86) Internationale Anmeldenummer: PCT/AT2006/000486
(87) Internationale Veröffentlichungsnummer: WO 2007/062440

(56) Entgegenhaltungen:
- FR-A1- 2 320 229
- US-A1- 3 120 932
- US-A1- 4 838 501
- US-A1- 5 005 783
- US-B1- 6 357 700

## Beschreibung

Die Erfindung betrifft ein automatisch auf dem Boden sowie während des Fluges, auf- und zusammenklappbares Luftschiff (wie durch die Merkmale des Anspruchs 1 definiert), das als ein Flugzeug bzw. als eine wieder verwendbare Raumfähre einsatzfähig ist, mit einer kombinieren zusammmenklappbaren Gaszelle, einem formgebenden Gitternetz, einem Flugzeugkörper bestehend aus einem Cockpit, einem Lagenaum, einem Maschinenraum und klappbaren Rädern, Komponente für Flugzeugnavigationssteurung, zwei drehbaren Raketenmotoren, einem klappbaren Ruder-Flügel, einem Mechanismus zur Betätigung des klappbaren Ruder-Flügels einer Verflüssigungsanlage für Helium, Brenntoffzellen, einem Drucktank für Helium, einem Drucktank für Sauerstoff, einem Drucktank für Wasserstoff und einer Vakuumpumpe.

Ein Hybridluftschiff, welches schwerer als die Luft fliegt, mit einer statischen und einer dynamischen Auftriebskraft ist aus US 4 838 501 A1 bekannt. Der Gegenstand dieser Erfindung besteht dann, dass der Abflug des Fluggerätes mittels einem statischen und einen dynamischen Auftrieb vollzogen wird. Der statische Auftrieb wird mittels einer Gaszelle, welche mit erhitztem Gas gefüllt ist, erzeugt. Der dynamische Auftrieb wird durch zwei schwenkbaren Triebwerke erzeugt. Die Forbewegung wird mittels den erwähnten zwei Triebwerke erzeugt. Das Fluggerät ist außerdem mit zwei Leitflächen ausgestattet. Diese sind dafür notwendig, um einen zusätzlichen Auftrieb während der Fortbewegung zu erzeugen. Dadurch wird die Luftwiderstandskraft bei einer Fortbewegung im Vergleich zu traditionellen Luftschiffen, die leichter als Luft fliegen, reduziert. Nachteilig bei diesem Luftschiff ist die Tatsache, dass der Auftrieb beim Abflug nicht vollkommen mittels des statischen Auftriebs erzeugt werden kann. Weiters, sind die Verluste von Schubkraft die durch die Luftwiderstandskraft verursacht werden trotz der Anwendung von Leitflächen, im Vergleich zu Flugzeugen relativ sehr hoch.

Ein Luftschiff mit variabler Geometrie ist aus US 3 005 783 A1, welches den nächstliegenden Stand der Technik darstellt, bekannt. Der Gegenstand dieser Erfindung besteht darin, dass die Form des Luftschiffes, welches leichter als Luft fliegt, in die Form eines Flugzeuges, welches schwerer als Luft fliegt, während des Fluges geändert wird. Die Formänderung während des Fluges vollzieht sich auf der Grundlage der Erzeugung von Druck in der flexiblen Hülle des Luftschiffes. Die notwendige zusätzliche Auftriebskraft während der Fortbewegung, wird mittels zwei Flügelartigen erweiterten Teile erzeugt. Dadurch wird die Lunwiderstandskraft bei einer Fortbewegung im Vergleich zu traditionellen Luftschiffen, die leichter als Luft fliegen, reduziert Wie beim oben erwähnten Hybridflugschiff bleibt die Wirkung der Luftwiderstandskraft im Vergleich zu Flugzeuge sehr hoch. Weiteres sind die beiden Fluggeräte wegen der Abhängigkeit des Auftriebs vom Leichtgas, nur für den Flug in der Erdatmosphäre geeignet und können daher nicht für einen Flug in den Weltraum verwendet werden Eine große Zahl von Flugzeugarten ist aus dem Zustand der Technik bekannt Nachteilig bei alle Arten von Flugzeuge, darunter auch Hubschrauben, sind die enorme Brennstoffaufwendungen beim Abflug wegen der vollständigen Abhängigkeit auf den dynamischen Auftrieb.

Eine Zahl von wiederverwendeten Raumfahrzeuge, die für kürzer als eine Erdumkreisung bestimmt sind, ist aus dem Zustand der Technik bekannt. Nachteilig bei solchen Raumfähren sind die hohen Fixkosten und Brennstoffaufwendung sowie einige technischen Umständlichkeit, wie die Abhängigkeit von spezialen Flughäfen oder von Rampen beim Start und.Fallschirmen bei der Landung, sowie andere Nachteile während des Starten, wie Lärm und Umweltverschmutzung durch Abgase.

Demgegenüber besteht die Aufgabe der vorliegenden Erfindung darin, ein automatisch auf dem Boden sowie während des Fluges, auf und zusammenklappbares Luftschiff, das als ein Flugzeug bzw. als eine wieder verwendbare Raumfähre einsatzfähig ist, zu bilden. Ein solches Luftschiff muss in der Lage sein den Abflug in der Erdatmosphäre vollständig mittels des statischen Auftriebes zu vollziehen, muss beim Bedarf den Abflug gleichermaßen vollständig mittels des dynamischen Auftriebes vollziehen, muss in der Lage sein beim waagrechten Flug in der Erdatmosphäre die eigene Gewichtskraft vollständig durch die Erzeugung von Auftriebskraft mittels den Flügeln zu überwinden, um die Verluste der Schubkraft durch die Luftwiderstandskraft zu minimieren. Ein solches LuRschili in der Form einer wieder verwendbaren Raumfähre für weniger als einer Erdumkreisung, muss außerdem in der Lage sein mittels des dynamischen Auftriebs darüber hinaus weiter in den Weltraum zu fliegen.

Die Erfindung löst die gestellte Aufgabe dadurch, dass die kombinierte zusammenklappbare Gaszelle aus einer faltbaren Hülle und einem nicht faltbaren Gehäuse besteht, das nicht faltbare Gehäuse auf den inneren Wände und dem Boden des Lagerraumes befestigt ist, die kombinierte zusammenklappbare Gaszelle im aufgeklappten Zustand mit Helium bzw. Wasserstoff gefüllt und im zusammengeklappten Zustand völlig lehr ist, die faltbare Hülle im aufgeklappten Zustand von dem Formgebenden Gitternetz eingefangen ist und im zusammengeklappten Zustand im inneren Bereich des nicht faltbaren Gehäuses liegt.

Ein automatisch auf dem Boden sowie während des Fluges, auf- und zusammenklappbares Luftschiff das als ein Flugzeug bzw. als eine wieder verwendbare Raumfähre für kurzer als eine Erdumkreisung verwendet wird, wird im aufgeklappten Zustand starten. Es wird erst zusammengeklappt wenn die notwendige Flughöhe in der Erdatmosphäre erreicht ist. Im zusammengeklappten Zustand nimmt das Fluggerät die Form eines Flugzeuges. Dadurch wird der Abflug mittels des statischen Auftriebes vollzogen werden und damit enorm an Energieveibrauch gespart. Auf der anderen Seite wird bei der Fortbewegung die Wirkung der Luftwiderstendskraß genauso minimal wie bei den traditionellen Flugzeuge bleiben. Daher verfügt so ein Fluggerät über ein Abflug- und Landevermögen eines Luftschiffes und über ein Fortbewegungsvenndgen eines Flugzeuges.

Der Abflug mittels statischen Auftriebes hat weitere Vorteile für eine widerverwendbare Raumfähren für kürzer als eine Erdumkreisung. Die bekannt, ist das größte Problem mit dem die Weltraumtechnik konfrontiert ist, die enormen Brennstoffmengen, die dafür notwendig sind um ein Weltraumgerät bis zum vorgesehenen Ziel in den Weltraum zu bringen. Es wird daher versucht dieses Problem durch verschiedene Wege zu umgehen, wie z.b. durch die Aufteilung des Fluges von kurzer als eine Erdumkreisung in zwei Stufen und die Aufteilung des Fluggeräts in zwei Fluggeräte. Nämlich ein Traggerät und ein getragenes Gerät. Beim Loslösen von dem Traggerät, wird das getragene Gerät nur die notwendige Brennstoffmenge für die zweite Flugstufe tragen. Eine Raumfähre von kürzer als eine Erdumkreisung mit einem Abflug- und Landevermögen eines Luftschiffes wird in Folge der Einsparung an Brennstoff ein Trägergerät und ein getragenes Gerät ersetzen und dadurch enorm an Fixkosten und variablen Kosten sparen.

Eine Raumfähre von kürzer als eine Erdumkreisung mit einem Abflug- und Landevermögen eines Luftschiffes wird in der Lage sein im aufgeklappten Zustand ein sicherer, leiser vertikaler Start ohne Rampe oder speziale Flughäfen vollziehen. Die Landung in dem aufgeklappten Zustand sichert ebenfalls eine weiche und sichere Landung. Dadurch wird es auf speziale Flughäfen oder Fallschirmen verzichtet.

In der Zeichnung ist der Erfindungsgegenstand beispielsweise dargestellt: Es zeigen:
Fig. 1 eine schematische Seitensicht eines automatisch auf und zusammenklappbares Luftschiff während des Fluges in dem aufgeklappten Zustand;
Fig. 2 eine schematische Teilseitensicht des Flugzeugkörpers;
Fig. 3 eine schematische Teilseitensicht der kombinierten Gaszelle während des zusammenklappen;
Fig. 4 eine schematische Sicht eines automatisch auf- und zusammenklappbares Luftschiffes im zusammengeklappten Zustand von oben;
Fig. 5 eine schematische Seitensicht eines automatisch auf- und zusammenklappbares Luftschiffes im zusammengeklappten Zustand auf dem Boden;
Fig. 6 eine schematische Seitensicht eines automatisch auf und zusammenklappbares Luftschiffes, im zusammengeklappten Zustand während des Fluges;
Fig. 7 eine schematische Seitensicht eines automatisch auf- und zusammenklappbares Luftschiffes beim auf- bzw. zusammenklappen auf dem Boden;
Fig. 8 eine schematische Seitensicht eines automatisch auf- und zusammenklappbares Luftschiffes beim auf- bzw. zusammenklappen während des Fluges;
Fig. 9 eine schematische Seitensicht eines automatisch auf- und zusammenklappbares Luftschiff, welches mit Hilfe des Vakuum leichter als die Luft fliegt, wobei das Luftschiff in dem aufgeklappten Zustand befindet; .
Fig. 10 eine schematische Teilseitensicht des Flugzeugkörpers, mit den notwendigen Bestandteilen für die Erzeugung von Vakuum;
Fig. 11 die Flugroute eines automatisch auf und zusammenklappbares Luftschiffes in der Form einer wiederverwendbare Raumfähre für kurzer als eine Erdumkreisung;
Fig. 12 die Flugroute eines automatisch auf- und zusammenklappbares Luftschiffes in der Form eines Flugzeuges.

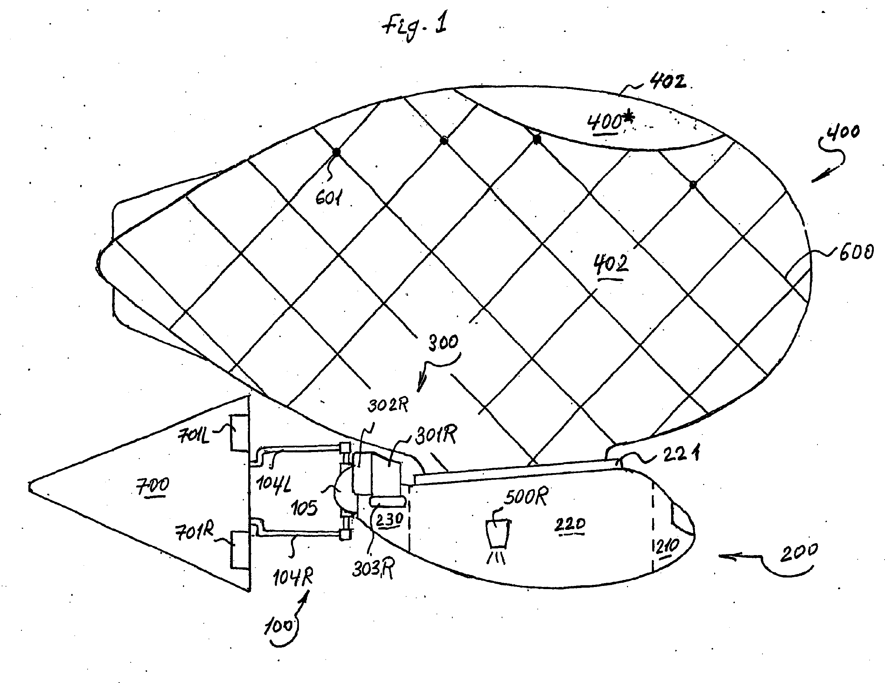

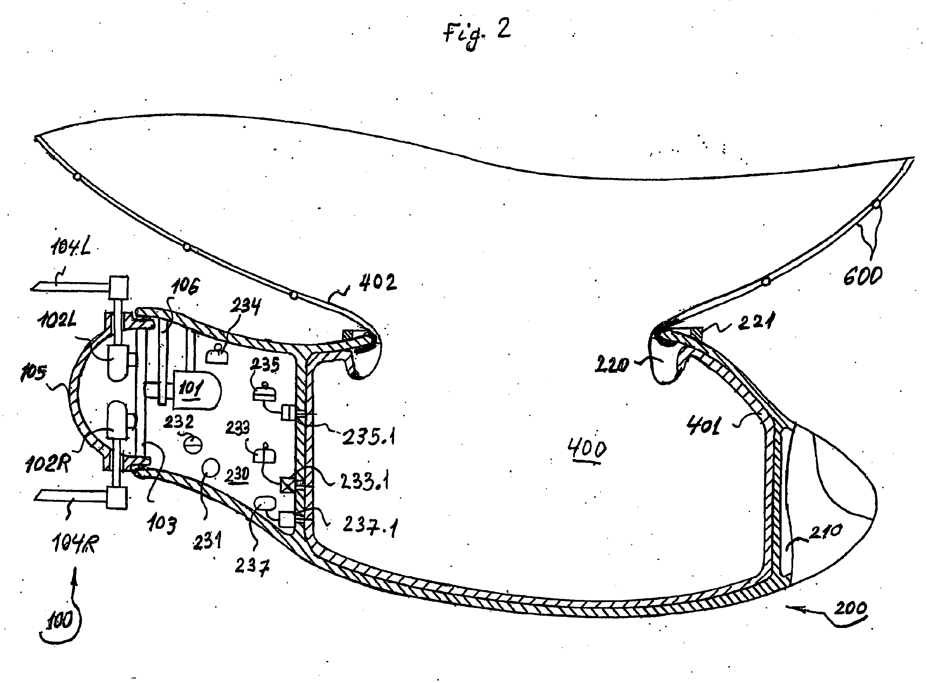

Gemäß Fig. 1 und 2 besteht ein automatisch auf dem Boden sowie während des Fluges, auf- und zusammenklappbares Luftschiff, das als ein Flugzeug bzw. als eine wiederverwendbare Raumfähre einsatzfähig ist, aus den folgenden Hauptbestandteilen: Eine kombinierte zusammenklappbare Gaszelle 400, ein Flugzeugkörper 200, Komponente für Flugzeugnavigationssteurung 300, zwei drehbaren Raketenmotoren 500L und 500R, ein klappbarer Ruder-Flügel 700 und ein Mechanismus zur Betätigung des klappbaren Ruder-Flügels 100.

Der Flugzeugkörper 200 besteht aus einem Cockpit 210, einem Lagerraum 220, einem Maschinenraum 230 und klappern Rädern 240. Die kombinierte zusammenklappbare Gaszelle 400 besteht aus einer faltbaren Hülle 402 und einem nicht faltbaren Gehäuse 401. Das nicht faltbare Gehäuse 401 wird auf den inneren Wände und dem Boden des Lagerraumes 220 befestigt.

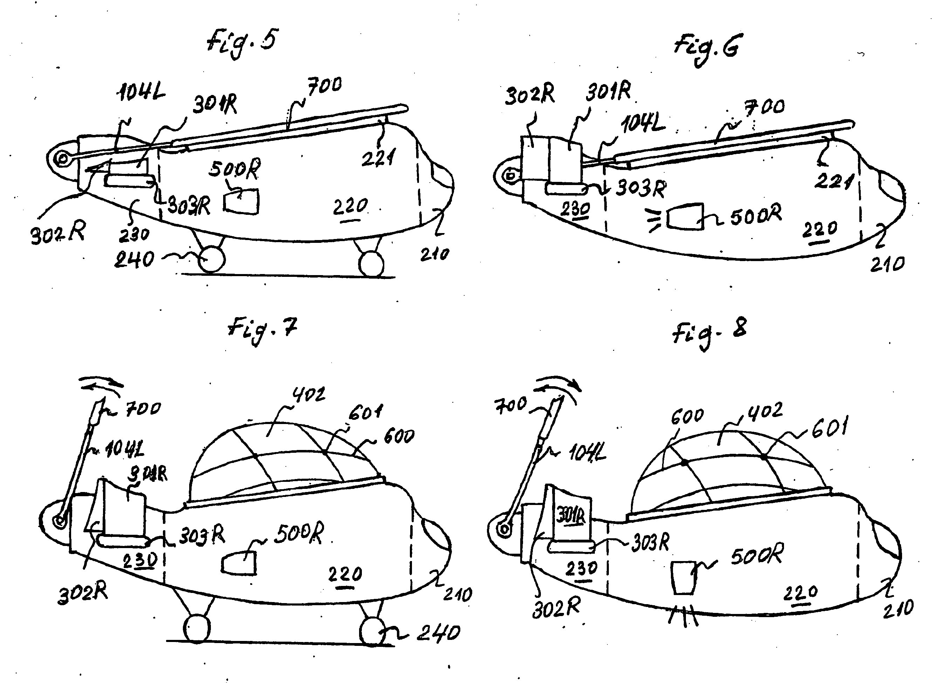

Das Zusammenklappen bzw. Aufklappen des Luftschiffes vollzieht sich auf dem Boden oder während des Fluges auf gleicher Weise automatisch. Gemäß Fig. 7 vollzieht sich das Zusammenklappen und das Aufklappen des Luftschiffes auf dem Boden. Das Zusammenklappen auf dem Boden ist notwendig damit wenig Platz für die Stationierung des Luftschiffes im Anspruch genommen wird. Gemäß Fig. 8 vollzieht sich das Zusammenklappen und Aufklappen des Luftschiffes während des Fluges.

Bei der Aufklappung des Fluggerätes wird das Helium bzw. das Wasserstoff aus dem Drucktank für Helium 233 bzw. aus dem Drucktank für Wasserstoff 235 mittels des Einlassventils 233.1 bzw. Einlassventils 235.1 in die kombinierten Gaszelle 400 bezogen. Beide Drucktanken 233 und 235 befinden sich in dem Maschinenraum 230. Nach der . Erfüllung der kombinierten Gazelle mit Helium bzw. mit Wasserstoff wird das aufgeklappte Luftschiff leichter als die Luft fliegen. In diesem Zustand wird die faltbare Hülle 402 von dem formgebenden Gitternetz 600 eingefangen. Letztere wird an den Stellen 601 auf der faltbaren Hülle 402 von oben und auf dem Lagerraum 220 von unten befestigt.

Der Ruder-Flügel 700 wird mit zwei Laschen 701L und 701 R ausgestattet und mittels des Mechanismus zur Betätigung des klappbaren Ruder-Flügels 100 betätigt. Letztere besteht aus einem Elektromotor 101, einer Betriebsbremse 106, zwei Elektromotoren 102L und 102R, drei Tragstücke 103, 104L und 104R und einer Drehküste 105. Das Tragstück 103 wird von beiden Enden auf der drehbaren Küste 105 von innen befestigt. Die drehbare Küste 105 selbst wird im Maschinenraum 230 gelagert. Die Elektromotoren 102L und 102R werden auf dem Tragstück 103 befestigt und seitens der Wellen auf der drehbaren Küste 105 gelagert. Der Elektromotor 101 wird auf dem Tragstück 103 seitens der Welle befestigt und samt der Betriebsbremse 106 auf dem Boden des Maschinenraumes 230 befestigt. Das Tragstück 104L bzw. 104R wird auf der Welle des Elektromotors 102L bzw.102R befestigt.

Der Ruder-Flügel 700 wird im aufgeklappten Zustand als Luftschiffruder benütz. In diesem Zustand wird er sich in d er vertikalen Position befindet und mittels der Elektromotoren 102L und 102R gesteuert.

Gemäß Fig. 6 sorgen die drehbaren Raketenmotoren 500L und 500R in der horizontalen Position für die Fortbewegung. Gemäß Fig. 7 sorgen sie in der vertikalen Position für den dynamischen Auftrieb. Die drehbaren Raketenmotoren 500L und 500R werden auf dem Flugkörper 200 befestigt und funktionieren auf der Grundlage der Verbrennung von verflüssigten Wasserstoff mittels verflüssigtem Sauerstoff. Der verflüssigte Wasserstoff wird aus dem Drucktank für Wasserstoff 235 und der verflüssigte Sauerstoff aus dem Drucktank für Sauerstoff 234 bezogen. Letztere befindet sich ebenfalls im Maschinenraum 230.

Das Auf- und Zusammenklappen während des Fluges wird auf der Grundlage der Erzeugung von dem notwendigen dynamischen Auftrieb mittels der drehbaren Raketenmotoren 500L und 500R vollzogen. Das ist notwendig damit das Fluggerät in der Schwebe bleiben kann.

Das Zusammenklappen des Luftgerätes während des Fluges beginnt mit der Verschaffung von absolutem Vakuum in der kombinierten zusammenklappbaren Gaszelle 400. Das Auspumpen von Helium bzw. Wasserstoff wird mittels der Vakuumpumpe 237, welche mit der Auslassventil 237.1 ausgestattet ist, vollzogen. Das Auspumpen beginnt während des Fluges in den höheren dünneren Schichten, damit ein übermäßiger Druck in der kombinierten zusammenklappbaren Gaszelle 400 vermieden wird. Im Falle von Verwendung von Helium wird die Vakuumpumpe 237 an die Verflüssigungsanlage 231 angeschlossen damit das ausgepumpte Helium verflüssigt wird und in dem Drucktank für Helium 233 bewahrt wird. Die Brennstoffzellen 232 werden betätigt damit Strom für die Verflüssigung des Heliums mittels der Verflüssigungsanlage 231 erzeugt wird. Die Brennstoffzellen 232 konsumieren Wasserstoff und Sauerstoff und erzeugen Strom und Wasser. Letztere wird von Bord abgeworfen. Die Verflüssigungsanlage 231, die Vakuumpumpe 237 und die Brennstoffzellen 232 befinden sich im Maschinenraum 230.

Im Falle von Verwendung von Wasserstoff wird der ausgepumpte Wasserstoff mittels der Vakuumpumpe 237 direkt in der Betätigung der Brennstoffzellen 232 oder Raketenmotoren 500L und 500R verwendet werden.

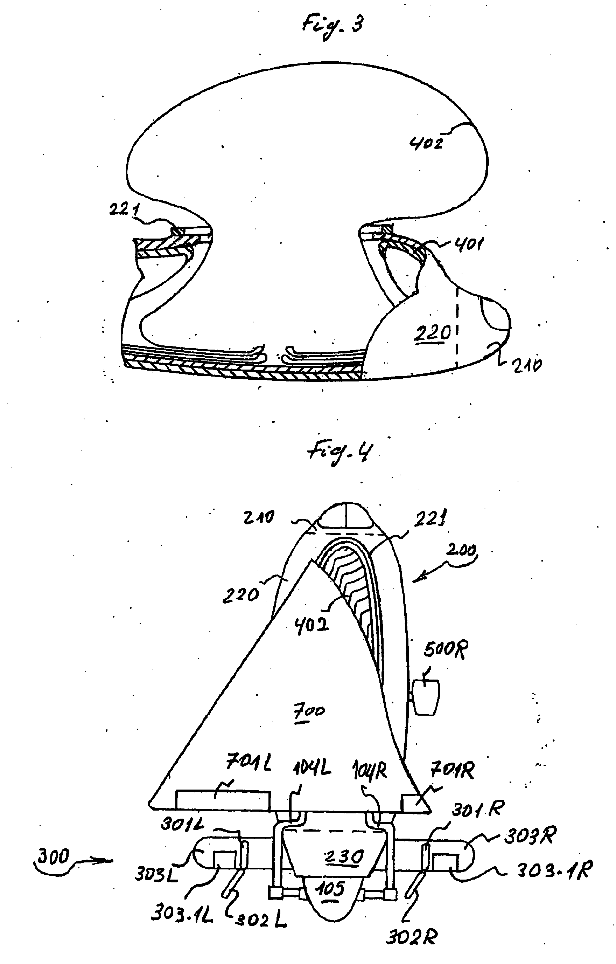

Gemäß Fig. 3 wird die faltbare Hülle 402 in Folge des Auspumpens des Heliums bzw. des Wasserstoffes in das nicht faltbare Gehäuse 401, unter der Wirkung des Vakuums, angezogen.

Das formgebende Gitternetz 600 wird auch in das nicht faltbare Gehäuse 401 mittels der faltbaren Hülle 402 angezogen. Schließlich unter der Wirkung des absoluten Vakuums wird die faltbare Hülle 402 samt des Gitternetzes 600 auf dem engstem Raum in dem nicht faltbaren Gehäuses 401 zusammengepresst.

darauf wird der klappbare Ruder-Flügel 700 zusammengeklappt. Das Zusammenklappen des klappbaren Ruder-Flügels 700 beginnt mit der Drehung der Koste 105 um ihren vertikalen Achsen um 90°. Das wird mittels des Elektromotors 101 nach der Befreiung seiner Welle von der Wirkung der Betriebsbremse 106 vollzogen. Als Folge wird sich der klappbare Ruder-Flügel 700 in der horizontalen Position befinden. Darauf wird der Ruder-Flegel 700 mittels der Elektromotoren 102L und 102R auf dem Lagerraum 220 gelegt. Damit der Ruder-Flügel 700 dichte direkt auf dem Lagerraum 220 geklappt wird, wird Letztere mit einem Abdichtungsmaterial 221 von oben ausgestattet. Mittels eines nicht dargestellten Mechanismus wird der Ruder-Flügel 700 von mehreren Punkten auf dem Lagerraum 220 fest gespannt.

Damit das Luftschiff in dem zusammengeklappten Zustand die Funktion eines Flugzeuges ausüben kann, wird es mittels der Komponente für Flugzeugnavigationssteurung 300 ausgestattet Letztere bestehen aus zwei Rudern 302L und 302R, zwei Heckflossen 301 L und 301R und zwei Leitwerke 303L und 303R. Jedes Leitwerk 303L bzw. 303R wird mit einem Höhenruder 303.1 L bzw. 303.1R ausgestattet und auf dem Maschinenraum 230 befestigt. Die _{'} Heckflosse 301 L bzw. 301 R wird auf dem Leitwerk 303L bzw 303R befestigt. Das Ruder 302R bzw. 302L wird auf der Heckflosse 30IR bzw. 301L gelagert.

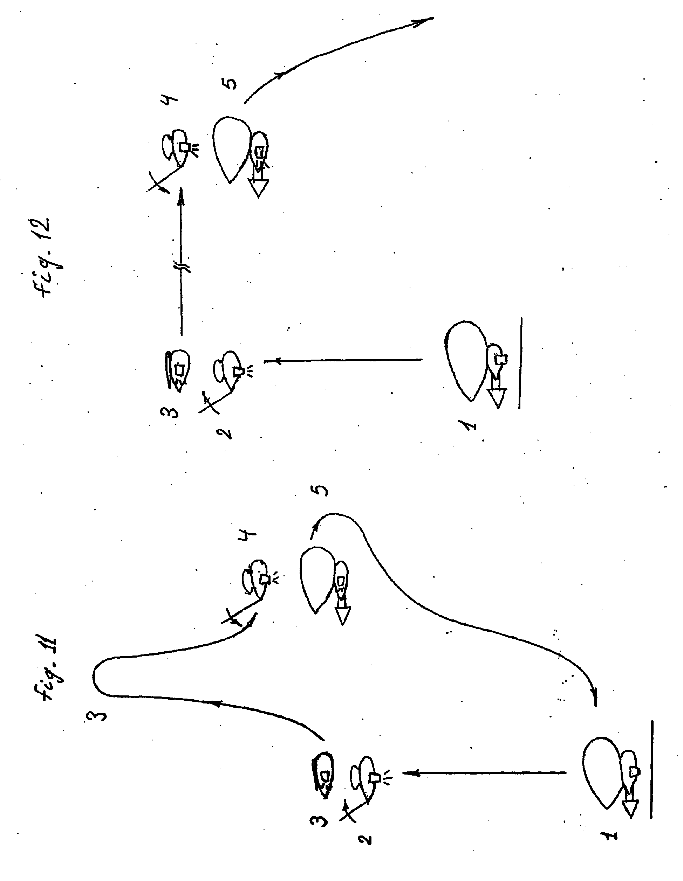

Gemäß Fig. 12 besteht die Flugroute eines automatisch auf und zusammenklappbares Luftschiffes in der Form eines Flugzeuges aus 5 Phasen. Die erste Phase beginnt mit dem vertikalen Start Der Abflug bis zur notwendigen Flughöhe während der ersten Phase wird mittels des statischen Auftriebs vollzogen Während der zweiten Phase wird das Fluggerät zusammenklappt. Die dritte Phase beginnt mit dem Flug in der Form eines Flugzeuges. Während der vierten Phase wird das Fluggerät aufgeklappt. Die fünfte Phase beginnt mit dem Aufflug in der Form eines Luftschiffes Richtung des Landeplatzes.

Gemäß Fig. 11 besteht die Flugroute eines automatisch auf- und zusammenklappbares Luftschiffes in der Form einer wieder verwendbare Raumfähre für kürzer als eine Erdumkreisung ebenfalls aus 5 Phasen. Die ersten zwei Phasen sind die selben wie im Fall des Flugzeuges. Zu Beginn der dritten Phase nimmt das Fluggerät in der Form einer Raumfähre einen vertikalen Kurs zu der gezielten Höhe im Weltraum. Diese Phase endet nach dem Rückflug ohne Schubkraft. Die vierte Phase beginnt mit dem Aufklappen des Luftgerätes beim Eintreten in die Erdatmosphäre. Während dieser Phase wird das Fluggerät aufgeklappt. Die fünfte Phase beginnt mit dem Aufflug in der Form eines Luftschiffes Richtung des Landeplatzes.

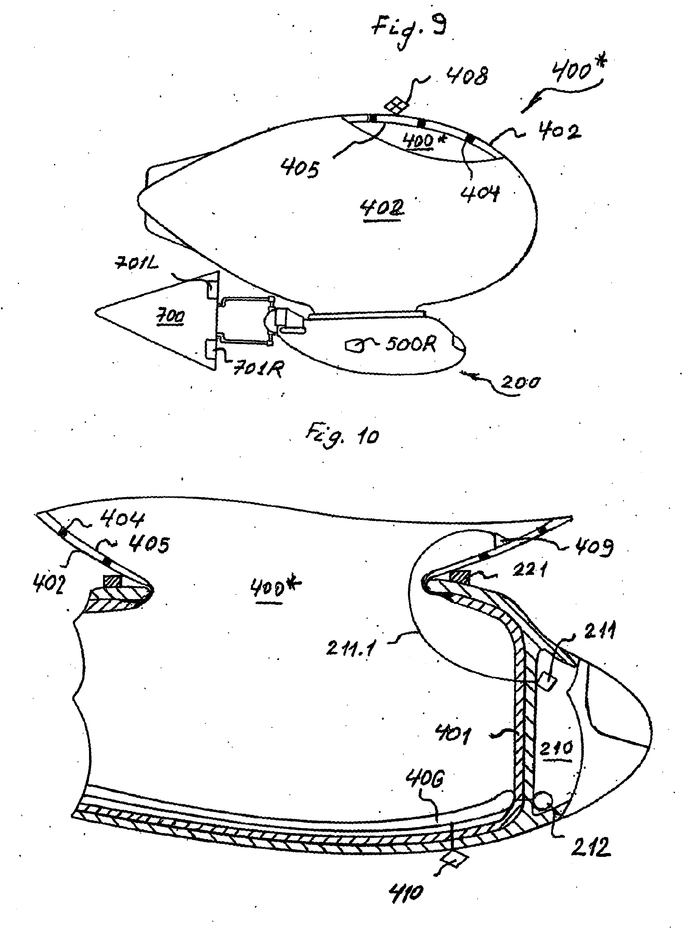

Gemäß Fig. 9 und 10 besteht die kombinierte zusammenklappbare Gaszelle 400* aus einer faltbaren Hülle 402, einer faltbaren Innenhülle 405, einer nicht faltbaren Gehäuse 401 und einer faltbaren Lufthülle 406. Die faltbare Hülle 402 und die faltbare Innenhülle 405 sind an einander mittels der Bindungselemente 404 gebunden.

Der geschlossene Raum zwischen der faltbaren Hülle 402 und der faltbaren Innenhülle 405 wird mit Luft bzw. mit einem Leichtgas gefüllt. Zur Vereinfachung wollen wir annahmen, dass der Raum mit Luft gefüllt wird. Dafür wurden das Auslassventil 408 und das einlaßventil 409 vorgesehen. Das Auslassventil 408 wird auf der faltbaren Hülle 402 von Außen befestigt. Das Einlassventil 409 wird auf der faltbaren Innenhülle 405 von innen befestigt.

Die Luftpumpe 211 befindet sich im Cockpit 210 und wird mittels der Leitung 211.1 an das Einlassventil 409 angeschlossen. Durch die Erzeugung von einem notwendigen Druck in dem Raum zwischen der faltbaren Außenhülle 402 und der faltbaren Innenhülle 405 wird die erwünschte aerodynamische Außenform der faltbaren Hülle 402 geschafft und gleichzeitig ein Vakuum im Inneren der kombinierten Gaszelle 400 erzeugt.

Ein Luftschiff, das leichter als die Luft mit Hilfe des Vakuums fliegt ist aus GB 1345288 bekannt. Die Anwendung dieses Prinzips für das Automatisch auf dem Boden sowie während des Fluges, auf- und zusammenklappbares Luftschiff ist sehr geeignet wegen der Beschleunigung des Auf und Zusammenklappen.

Da die Verschaffung von absolutem Vakuum in der kombinierten klappbaren Gaszelle 400* zu übertriebenem Materialaufwand führen könnte, werden kleine Mengen von Helium bzw. Wasserstoff im Inneren zugeführt, um einen gewissen Gegendruck von innen zu erzeugen.

Das Aufklappen des Luftschiffes beginnt mit dem Einpumpen von Luft in den Raum zwischen der faltbaren Hülle 402 und der faltbaren Innenhülle 405. Zur gleichen Zeit wird die kombinierte zusammenklappbare Gaszelle 400* mit der notwendigen Menge von Helium bzw. Wasserstoff gefüllt. Das Zusammenklappen beginnt mit der Öffnung des Auslassventils 408 und Auspumpen von Helium bzw. Wasserstoff aus der kombinierten zusammenklappbaren Gaszelle 400*.

Um eine Landung für das Luftgerät in der Form eines Luftschiffes zu ermöglichten wurde die Lufthülle 406 vorgesehen. Diese wird mit einer Vakuumpumpe 212 und einem Einhissventil 410 ausgestattet. Mit der Öffnung des Einlassventils 410 wird die Außenluft in die Lufthülle 406 strömen und das Luftschiff wird schwerer als die Luft fliegen. Diese Luft kann wieder mit der Vakuumpumpe 212 ausgepumpt werden damit das Luftschiff wieder leichter als die Luft fliegen kann. Die Vakuumpumpe 212 befindet sich im Cockpit 210.

## Patentansprüche

1. Automatisch auf dem Boden sowie während des Fluges, auf- und zusammenklappbares Luftschiff, das als ein Flugzeug bzw. als eine wiederverwendbare Raumfähre einsatzfahig ist, mit einer kombinierten zusammenklappbaren Gaszelle (400), einem formgebenden Gitternetz (600), einem Flugzeugkörper (200) bestehend aus einem Cockpit (210), einem Lagerraum (220), einem Maschinenraum (230) und klappbaren Rädern (240), Komponente für Flugzeugnavigationssteurung (300), zwei drehbaren Raketenmotoren (500L, 500R), einem klappbaren Ruder-Flügel (700), einem Mechanismus zur Betätigung des klappbaren Ruder- Flügels (100), einer Verflüssigunganlage für Helium (231), Brennstoffszellen (232), einem Drucktank für Helium (233), einem Drucktank für Sauerstoff (234), einem Drucktank für Wasserstoff (235), und einer Vakuumpumpe (237), wobei die kombinierte zusammenklappbare Gaszelle (400) aus einer faltbaren Hülle (402) und einem nicht faltbaren Gehäuse (401) besteht, das nicht faltbare Gehäuse (401) auf den inneren Wände und dem Boden des Lagerraumes (220) befestigt ist, die Gaszelle (400) im aufgeklappten Zustand mit Helium bzw. Wasserstoff gefüllt und im zusammengeklappten Zustand völlig Lehr ist, die faltbare Hülle (402) im aufgeklappten Zustand von dem formgebenden Gitternetz (600) eingefangen ist und im zusammengeklappten Zustand samt des formgebenden Gitternetzes (600) im inneren Bereich des nicht faltbaren Gehäuses (401) liegt.

2. Automatisch auf dem Boden sowie während des Fluges, auf- und zusammenklappbares Luftschiff, nach Anspruch 1, ***dadurch gekennzeichnet, dass*** dass das Luftschiff mit einer Luftpumpe (211) und einer Vakuumpumpe (210) ausgestattet ist und die kombinierte zusammenklappbare Gaszelle (400*) aus einer faltbaren Hülle (402), einer faltbaren Innenhülle (405), einer nicht faltbaren Gehäuse (401) und einer faltbaren Lufthülle (406) besteht, die falzbare Hülle (402) und die faltbare Innenhülle (405) an einander mittels der Bindungselemente (404) gebunden sind, das Auslaßventil (408) auf der faltbaren Hülle (402) von Aussen befestigt ist, das Einlaßventil (409) auf der faltbaren Innenhülle (405) von Innen befestigt ist.

3. Automatisch auf dem Boden sowie während des Fluges, auf- und zusammenklappbares Luftschiff, nach Anspruche 1 und 2, ***dadurch gekennzeichnet, dass*** der Mechanismus zur Betätigung des klappbaren Ruder-Flügels (100) aus einem Elektromotor (101), einer Betriebsbremse (106), zwei Elektromotoren (102L, 102R), drei Tragstücke (103, 104L, 104R) und einer Drehküste (105) besteht, wobei das Tragstück (103) von beiden Enden auf der drehbaren Küste (105) von innen befestigt ist, die drehbare Küste (105) im Maschinenraum (230) gelagert ist, die Elektromotoren (102L, 102R) auf dem Tragstück (103) befestigt und seiten der Wellen auf der drehbaren Küste (105) gelagert sind, der Elektromotor (101) auf dem Tragstück (103) seitens der Welle befestigt ist und samt der Betriebsbremse (106) auf dem Boden des Maschinenraumes (230) befestigt sind, das Tragstück (104L) bzw. (104R) auf der Welle des Elektromotors (102L) bzw. (102R) befestigt ist.

4. Automatisch auf dem Boden sowie während des Fluges, auf- und zusammenklappbares Luftschiff, nach Ansprüche 1 - 3, ***dadurch gekennzeichnet, dass*** der klappbare Rudder-Flügel (700) mit zwei Laschen (701L, 701R) ausgestattet und auf den Tragstücken (104P, 104L) befestigt ist, wobei sich der Ruder-Flügel im aufgeklappten Zustand, wenn er als Luftschiffruder benütz wird, in der vertikalen Position befindet und mittels der Elektromotoren (102L, 102R) gesteuert wird und wenn sich der Ruder-Flügel (700) im zusammengeklapptem Zustand, wenn er als Flugzeugflügel benütz wird, in der horizontalen Position befindet und auf dem Lagerraum (220) fest gespannt ist.

5. Automatisch auf dem Boden sowie während des Fluges, auf- und zusammenklappbares Luftschiff, nach Anspruche 1- 4, ***dadurch gekennzeichnet, dass*** die Komponente für Flugzeugnavigationssteurung (300) aus zwei Rudern (302L, 302R), zwei Heckflossen (301L, 301R) und zwei Leitwerke (303L, 303R) bestehen, wobei das Leitwerk (303L) bzw. (303R), welches, mit einem Höhenruder (303.IL) bzw. (303.IR) ausgestattet ist, auf dem Maschinenraum (230) befestigt ist, die Heckflosse (301L) bzw. (301R) auf dem Leitwerk (303L) bzw. (303R) befestigt ist, das Ruder (302R) bzw. (302L) auf der Heckflosse (301L) bzw. (301R) gelagert ist.

## Claims

1. An airship which can be unfolded and folded up automatically on the ground and during flight and which can be operated as an aircraft or as a reusable space shuttle, having a combined collapsible gas cell (400), a grid network (600) which provides the shape, an aircraft body (200) comprising a cockpit (210), a cargo bay (220), a machine bay (230) and collapsible wheels (240), components for aircraft navigation control (300), two rocket motors (500L, 500R) which can be rotated, a collapsible rudder-wing (700), a mechanism for operation of the collapsible rudder-wing (100), a liquefaction plant for Helium (231), fuel cells (232), a pressure tank for helium (233), a pressure tank for oxygen (234), a pressure tank for hydrogen (235) and a vacuum pump (237), whereas the combined collapsible gas cell (400) comprises an envelope (402) which can be folded and a housing (401) which cannot be folded, the housing (401) which cannot be folded is mounted on the inner walls and the bottom of the cargo bay (220), the gas cell (400) is filled with helium or hydrogen in the unfolded state, and is completely empty in the collapsed state, the envelope (402) which can be folded is held by the grid network (600) which provides the shape when in the unfolded state, and is located along with the grid network (600) in the internal area of the housing (401), which cannot be folded, in the collapsed state.

2. An airship which can be unfolded and folded up automatically on the ground and during flight according to claim 1, *wherein* the combined collapsible gas cell (400*) comprises an envelope (402) which can be folded, an inside envelope (405) which can be folded, a housing (401) which cannot be folded and an air envelop (406) which can be folded, the envelope (402) which can be folded and the inside envelope (405) which can be folded are connected together by means of the binding elements (404), the exhaust valve (408) is fixed to the envelope (402) from the outside, the inlet valve (409) is fixed to the inside envelope (405) from the inside.

3. An airship which can be unfolded and folded up automatically on the ground and during flight according to claims 1 and 2, *wherein* the mechanism for operation of the collapsible rudder-wing (100) comprises an electric motor (101), a service brake (106), two electric motors (102L, 102R), three supporting elements (103, 104L, 104R) and a rotary case (105), whereas the supporting element (103) is fixed from both sides to the rotary case (105) from the inside, the rotary case (105) is pivot mounted in the machine bay (230), the electric motors (102L, 102R) are fixed to the supporting element (103) and their shafts are pivot mounted in the rotary case (105), the electric motor (101) is fixed from the shaft to the supporting element (103) and mounted along with the service brake (106) on the bottom of the machine bay (230), the supporting element (104L) is fixed to the shaft of the electric motor (102L) and the supporting element (104R) is fixed to the shaft of the electric motor (102R).

4. An airship which can be unfolded and folded up automatically on the ground and during flight according to claims 1-3, *wherein* the collapsible rudder-wing (700) is provided with two flaps (701L, 701R) and fixed to the supporting elements (104L, 104R), whereas when the rudder-wing (700) is being used as an airship rudder in the unfolded state it would be vertically positioned and steered by means of the electric motors (102L, 102R) and when it is being used as an aircraft wing in the collapsed state it would be horizontally positioned and tightly clamped over the cargo bay (220).

5. An airship which can be unfolded and folded up automatically on the ground and during flight according to claims 1-4, *wherein* the components for aircraft navigation control (300) comprise two rudders (302L, 302R), two vertical stabilizers (301L, 301R) and two horizontal stabilizers (303L, 303R), whereas the horizontal stabilizer (303L) which is provided with the elevator (303.1L) and the horizontal stabilizer (303R) which is provided with the elevator (303.1R) are fixed to the machine bay (230), the vertical stabilizer (301L) is fixed to the horizontal stabilizer (303L) and the vertical stabilizer (301R) is fixed to the horizontal stabilizer (303R), the rudder (302R) is hinged on the vertical stabilizer (301R) and the rudder (302L) is hinged on the vertical stabilizer (301L).

## Revendications

1. Aéronef dépliable et repliable automatiquement sur le sol comme en vol, utilisable comme avion ou navette spatiale réutilisable, avec une cellule à gaz repliable combinée (400), un grillage déterminant la forme (600), un corps d'aéronef (200) composé d'un cockpit (210), d'un espace de stockage (220), d'un compartiment des machines (230) et de roues repliables (240), un composant pour pilotage de navigation aérienne (300), deux moteurs-fusées pivotables (500L, 500R), une aile-gouverne repliable (700), un mécanisme d'actionnement de l'aile-gouverne repliable (100), une installation de liquéfaction de l'hélium (231), des cellules à combustible (232), un réservoir à hélium sous pression (233), un réservoir à oxygène sous pression (234), un réservoir à hydrogène sous pression (235) et une pompe à vide (237), la cellule à gaz repliable combinée (400) se composant d'une gaine pliable (402) et d'un boîtier non pliable (401), le boîtier non pliable (401) étant fixé sur les parois intérieures et le sol de l'espace de stockage (220), la cellule à gaz (400) étant remplie d'hélium ou d'hydrogène à l'état déplié et entièrement vide à l'état replié, la gaine pliable (402) étant prise à l'état déplié dans le grillage de forme (600) et se trouvant à l'état replié, avec le grillage de forme (600), dans l'espace intérieur du boîtier non pliable (401).

2. Aéronef dépliable et repliable automatiquement sur le sol comme en vol, selon revendication 1, ***caractérisé par le fait que*** la cellule à gaz repliable combinée (400*) se compose d'une gaine pliable (402), d'une gaine intérieure pliable (405), d'un boîtier non pliable (401) et d'une gaine à air pliable (406), la gaine pliable (402) et la gaine intérieure pliable (405) étant reliées entre elles au moyen des éléments de liaison (404), la soupape de sortie (408) étant fixée de l'extérieur sur la gaine pliable (402) et la soupape d'alimentation (409) fixée de l'intérieur sur la gaine intérieure pliable (405).

3. Aéronef dépliable et repliable automatiquement sur le sol comme en vol, selon revendications 1 et 2, ***caractérisé par le fait que*** le mécanisme pour l'actionnement de l'aile-gouverne pliable (100) se compose d'un moteur électrique (101), un frein de service (106), deux moteurs électriques (102L, 102R), trois éléments porteurs (103, 104L, 104R) et un tambour rotatif (105), l'élément porteur (103) étant fixé de l'intérieur des deux côtés sur le tambour rotatif (105), le tambour rotatif (105) étant logé dans le compartiment des machines (230), les moteurs électriques (102L, 102R) fixés sur l'élément porteur (103) et reposant côté arbres sur le tambour rotatif (105), le moteur électrique (101) fixé sur l'élément porteur (103) côté arbre et fixé avec le frein de service (106) sur le sol du compartiment des machines (230), et l'élément porteur (104L) ou (104R) fixé sur l'arbre du moteur électrique (102L) ou (102R).

4. Aéronef dépliable et repliable automatiquement sur le sol comme en vol, selon revendications 1 à 3, ***caractérisé par le fait que*** l'aile-gouverne pliable (700) est équipée de deux brides (701L, 701R) et fixée sur les éléments porteurs (104R, 104L), l'aile-gouverne à l'état déplié, lorsqu'elle est utilisée comme gouverne de l'aéronef, se trouvant en position verticale et étant commandée au moyen des moteurs électriques (102L, 102R), et l'aile-gouverne (700) à l'état replié, lorsqu'elle est utilisée comme aile de l'avion, se trouvant en position horizontale et solidement serrée sur l'espace de stockage (220).

5. Aéronef dépliable et repliable automatiquement sur le sol comme en vol, selon revendications 1 à 4, ***caractérisé par le fait que*** le composant pour le pilotage de navigation aérienne (300) se compose de deux gouvernes (302L, 302R), deux ailerons arrière (301L, 301R) et deux empennages (303L, 303R), l'empennage (303L) ou (303R), équipé d'une gouverne de profondeur (303. IL) ou (303. IR), étant fixé sur le compartiment des machines (230), l'aileron arrière (301L) ou (301R) fixé sur l'empennage (303L) ou (303R), et la gouverne (302R) ou (302L) reposant sur l'aileron arrière (301L) ou (301R).
